Europäisches Patentamt

European Patent Office

Office européen des brevets

(11) Publication number: **0 244 110**
**A2**

## EUROPEAN PATENT APPLICATION

(21) Application number: 87303134.8

(22) Date of filing: 10.04.87

(51) Int. Cl.⁴: **B60J 7/05**

(30) Priority: 02.05.86 GB 8610835

(43) Date of publication of application:
04.11.87 Bulletin 87/45

(84) Designated Contracting States:
BE DE ES FR GB IT NL SE

(71) Applicant: Britax Weathershields Limited
180 Sherlock Street
Birmingham B5 7EH(GB)

(72) Inventor: Cunningham, Douglas James
42 Viking Way Horndean
Portsmouth Hampshire(GB)
Inventor: McKernon, David Alan
28 White Horse Way Littlehampton
West Sussex BN17 6NP(GB)

(74) Representative: Hollinghurst, Antony
Britax Limited Patent Department Kingsham
Road
Chichester West Sussex PO19 2UG(GB)

(54) Opening roof for a motor vehicle.

(57) An opening roof assembly for a motor vehicle, has a rigid panel (20) closing an opening in the vehicle roof (14), the panel (20) being supported at each side by front and rear guide means on respective guide tracks (26) extending along each side of an opening in the vehicle roof (14). The front guide means (32) are adapted to permit pivotal movement of the panel (20) about a horizontal axis at right-angles to the guide tracks (26) and the rear guide means being adapted to raise and lower the rear edge of the panel (20) so that the panel (20) can be opened either by pivoting the panel (20) upwardly about a transverse horizontal axis adjacent to its front edge, so that the rear edge of the panel (20) is above the vehicle roof (14), or by sliding the panel (20) rearwardly below the vehicle roof (14) behind the opening. An arm (72) has one end attached to the vehicle roof (14) at a location (74) adjacent to the front edge of the opening in the vehicle roof (14) and blocking means (76) at its other end adapted to engage over a complementary formation (68) on the panel (20) to prevent rearward movement of the panel (20), stop means (28) on the track (26) being adapted to limit downward movement of the blocking means (76) so as to allow the complementary formation (68) to disengage from the blocking means (76) when the rear edge of the panel (20) is below the vehicle roof (14).

FIG 6

Xerox Copy Centre

## OPENING ROOF FOR A MOTOR VEHICLE

This invention relates to an opening roof assembly for a motor vehicle of the type comprising a rigid panel closing an opening in the vehicle roof, the panel being supported at each side by front and rear guide means on respective guide tracks extending along each side of an opening in the vehicle roof and behind said opening below the vehicle roof, the front guide means being adapted to permit pivotal movement of the panel about a horizontal axis at right-angles to the guide tracks and the rear guide means being adapted to raise and lower the rear edge of the panel so that the panel can be opened either by pivoting the panel upwardly about a transverse horizontal axis adjacent to its front edge, so that the rear edge of the panel is above the vehicle roof, or by sliding the panel rearwardly below the vehicle roof behind the opening.

An opening roof of this type is disclosed in our European Patent Application No. 86301561. However, relatively complex interlocking means are required to prevent the panel from moving rearwardly except when its rear edge is fully lowered and to prevent the rear edge of the panel from being raised except when it is in front of the rear edge of the opening in the vehicle roof.

According to one aspect of the invention, in an opening roof assembly of this type, an arm has one end attached to the vehicle roof at a location adjacent to the front edge of the opening in the vehicle roof and blocking means at its other end adapted to engage over a complementary formation on the panel to prevent rearward movement of the panel, stop means on the track being adapted to limit downward movement of the blocking means so as to allow the complementary formation to disengage from the blocking means when the rear edge of the panel is below the vehicle roof.

Preferably. the arm is resiliently biased towards the stop means.

Patent Specification GB-A-1523538 also discloses an opening roof of the type described in the opening paragraph of this specification. Each rear guide means comprises a downwardly projecting flange secured to the panel and having first and second slots therein extending longitudinally relative to the guide tracks. the first slot being closed at both ends and the second slot being open to the bottom edge of the flange at its forward end. together with a guide shoe mounted on the track. a lever pivotally mounted on the guide shoe and carrying a first follower permanently engaging in the first slot and a second follower arranged to engage in the second slot when the panel is level with or below the vehicle roof.

The lever also carries a third follower spaced from the first follower and engaging in the first slot which is shaped so as to control the angle of the lever relative to the panel as the rear edge of the latter is raised. The height of the flange has a significant effect on the overall height of the assembly when the panel is closed. Since the height of the flange must be sufficient to accomodate the first slot, the extent to which the rear edge of the panel can be raised is limited.

In an opening roof assembly of the type described above, in which the rear guide means comprises a downwardly projecting flange secured to the panel, a traveller mounted on the track and a lever pivotally mounted on the traveller, the flange having first and second slots therein extending longitudinally relative to the guide tracks, the first slot being closed at both ends and the second slot being open to the bottom edge of the flange at its forward end, the lever carrying a first follower permanently engaging in the first slot and a second follower arranged to engage in the second slot when the panel is level with or below the vehicle roof, a second aspect of the invention is characterised in that the second follower is mounted on the lever at an intermediate position between the guide shoe and the first follower, a first cam formation is provided on the lever and a second cam formation is provided on the flange and arranged to engage with the first cam formation to prevent movement of the rear edge of the panel to positions above the level of the vehicle roof when the first follower is rearward of a predetermined position adjacent to the front end of the first slot and to prevent rearward movement of the first follower from said predetermined position when the rear edge of the panel is above the level of the vehicle roof.

Preferably, said predetermined position is rearward of the front end of the first slot and the second follower is arranged to engage with a third cam formation on the flange to raise the rear edge of the panel as the first follower moves from said predetermined position to the front end of the first slot.

An embodiment of the invention will now be described. by way of example, with reference to the accompanying drawings. in which:

Figure 1 is a fragmentary perspective sectional view of a motor car fitted with an opening roof assembly of the first kind to which the invention relates. showing the panel in its closed position and each of its two alternative open positions:

Figure 2 is a longitudinal sectional view of the opening roof assembly shown in Figure 1, with the panel in its closed position;

Figure 3 is a cross-sectional view taken on the line 3 - 3 in Figure 2;

Figure 4 is an exploded view of one of the rear guide means of the sliding roof assembly shown in Figures 1 to 3;

Figure 5 is a longitudinal sectional view, similar to Figure 2, but with the rear edge of the panel lowered preparatory to sliding it under the vehicle roof; and

Figure 6 is a longitudinal sectional view, similar to Figure 2, with the rear edge of the panel raised above the vehicle roof.

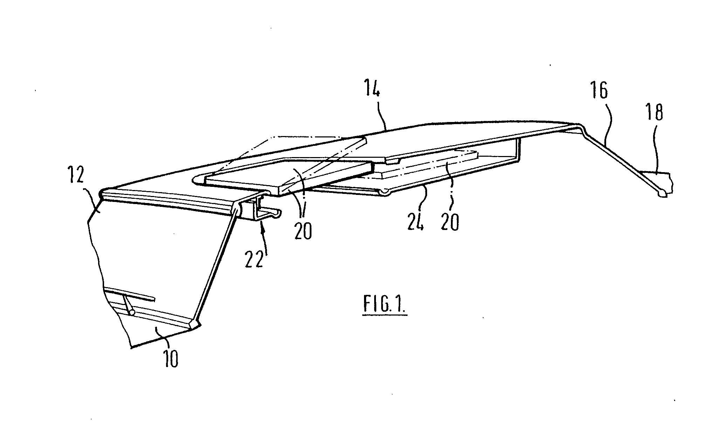

Figure 1 shows the upper part of the body of a saloon motor car comprising a bonnet 10, a windscreen 12, a roof 14, a rear window 16 and a boot 18. A movable glass roof panel 20 is located in a frame 22 bounding an opening in the vehicle roof and including a drain tray 24 forming the bottom of a chamber into which the roof panel 20 can be slid below the vehicle roof 14.

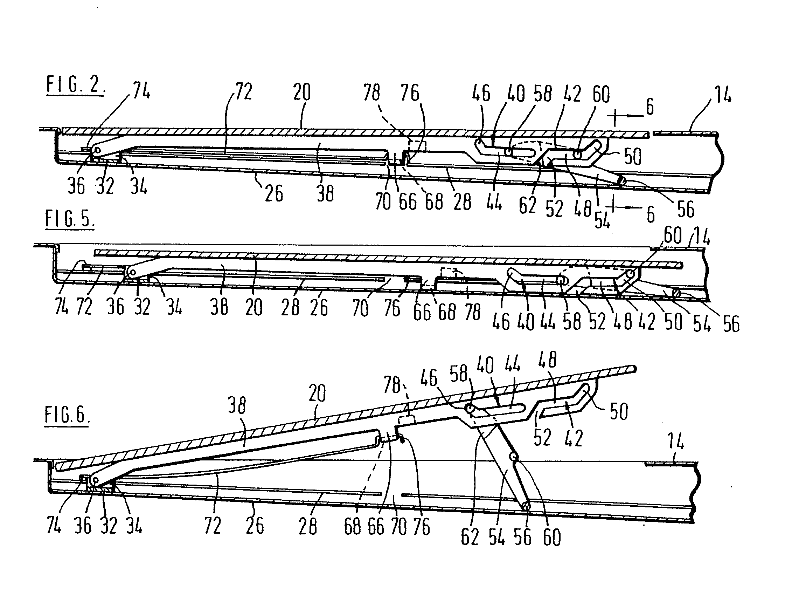

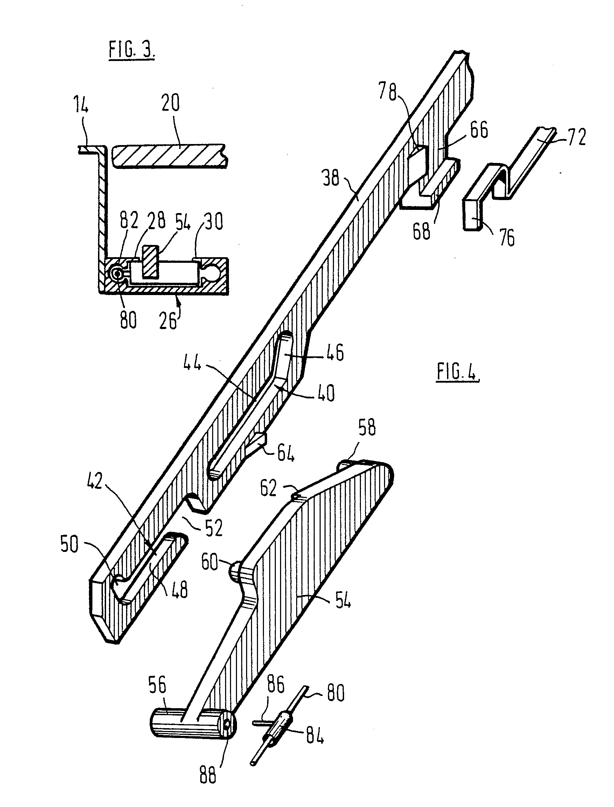

A respective guide track, on which the panel 20 is slidable, extends along each side of the opening in the vehicle roof 14 and into the space above the drain tray 24. Figure 2 shows the track 26 on the car driver's right-hand side of the opening in the vehicle roof 14, in longitudinal cross-section. The track consists of a generally U-shaped channel (see Figure 3), the side walls of which have respective inwardly directed flanges 28 and 30 extending along substantially the whole length thereof. As can be seen from Figure 2, a front shoe 32, which has lateral projections (not shown) engaging under the flanges 28 and 30, is slidable along the track 26. The front shoe 32 has two upwardly extending limbs 34 which project between the flanges 28 and 30 and carry a pivot pin 36. The panel 20 is mounted on a bracket 38, the front end of which is pivotally mounted on the pivot pin 36.

As can be seen in Figures 2 and 4, first and second slots 40 and 42 are formed in the rear end of the bracket 38. The first slot 40 has a main portion 44 which extends parallel to the track 26 when the panel 20 is level with the vehicle roof, and a front portion 46 which is inclined upwardly relative to the main portion 44. The second slot 42 has a main portion 48 which extends parallel to the main portion 44 of the first slot 40, a rear portion 50 which is inclined upwarldly relative to the main portion 48, and a front portion 52 which is inclined downwardly relative to the main portion 48 with its front end opening through the bottom edge of the bracket 38.

A lever 54 has a first peg 56 at one end projecting from both sides so as to engage under the flanges 28 and 30 of the track 26. A second peg 58 projects from one side of the other end of the lever 54 into the first slot 40 in the bracket 38. A third peg 60 projects from the same side of the lever 54 as the second peg 58 so as to be enageable in the second slot 42 in the bracket 38, the relative locations of the three pegs 56, 58 and 60 being such that, when the second and third pegs 58 and 60 are located in the main portions 44 and 48 of the first and second slots 40 and 42 respectively, the panel 20 is level with the vehicle roof 14, as shown in Figure 2.

When the second and third pegs 58 and 60 are at the front ends of the main portions 44 and 48 of the first and second slots 40 and 42 respectively, the lever 54 is free to pivot relative to the bracket 38 so that the second peg moves up the front portion 46 of the front slot 40 as the third peg 60 moves down and eventually out of the front portion 52 of the rear slot 42. In order to prevent the second peg from moving away from the front of the front slot 40 when the third peg 60 is out of engagement with the rear slot 42, an arcuate cam 62 is formed on the lever 54 with its axis coincident with that of the second peg 58 and arranged to engage with a cam follower 64 on the bracket 38.

In front of the front slot 40, the bracket 38 has a downwardly extending limb 66 with a side projection 68 (Figure 4) on its bottom end. The projection 68 is received in a gaps 70 in the flange 28 when the panel is in its closed position as illustrated in Figure 2, thus preventing rearward movement of the panel 20 along the track 26. One end of an arm 72 is riveted to the upper surface of the flange 28 at a location 74 adjacent to the position of the front shoe 32 when the panel 20 is in its closed position. The arm 72 is formed of spring steel and is oriented so that, when relaxed, it lies parallel to the flange 28. At its other end, the arm 72 has a hook formation 76 which surrounds the upper part of the projection 68 when the panel 20 is in its closed position, the free end of the hook 76 resting on the flange 28 behind the gap 70 therein. A stop formation 78 is formed on the side of the bracket 38 with its front face spaced rearwardly of the rear face of the side projection 68 by a distance, in the direction parallel to the panel 20, slightly greater than the thickness of the arm 72.

In order to drive the lever 54 along the track 28, a drive cable 80 is accommodated in a groove 82 formed in the track 28 under the flange 28 (Figure 3). As can be seen in Figure 4, a traveller 84 is clamped to the drive cable 80 and has a peg 86 which engages in a hole 88 in one end of the first peg 56.

When the rear edge of the panel 20 is lowered, prior to sliding it under the vehicle roof 10, the traveller 84 moves the first peg 56 rearwardly from the position shown in Figure 2 to bring the second and third pegs 58 and 60 to the rear ends of their respective slots 40 and 42, the third peg 60 moving up the inclined rear portion 50 so as to pivot the lever 54 to a more horizontal position, thus permitting rearward movement of the panel 20.

Continued rearward movement of the traveller 84 causes simultaneous rearward movement of the panel 20, first to the position shown in Figure 5 and then to a fully open position (not shown). Forward movement of the traveller 84 causes forward movement of the panel 20, engagement of the projection 68 with the underside of the flange 28 preventing the rear edge of the panel 20 being raised until it is aligned with the opening in the vehicle roof 14. When the panel 20 has reached a position in which the rear face of the hook formation 76 abuts against the stop 78, further forward movement of the panel 20 is prevented, continued forward movement of the traveller 84 causing the rear edge of the panel 20 to be raised back to its closed position, as illustrated in Figure 2.

When the rear edge of the panel is to be raised, the traveller 84 moves the first peg 56 forwardly from the position shown in Figure 2 to bring the second and third pegs 58 and 60 to the front ends of the main portions 44 and 48 of their respective slots 40 and 42. Continued forward movement of the first peg 56 causes the third peg 60 to engage with the upper edge of the downwardly inclined front portion 52 of the second slot 48, thereby starting to raise the rear edge of the panel 20 while the second peg 58 moves up the front portion 46 of the first slot 40. As the third peg 60 disengages from the second slot, the second peg 58 reaches the front end of the front portion 40.

Continued forward movement of the peg 56 causes the lever 54 to pivot about the second peg 58, bringing the arcuate cam 62 into engagement with the cam follower 64 to retain the second peg 58 at the front end of the front portion 46 of the first slot 40. The panel 20 pivots about the pivot pin 36 to its fully raised position shown in Figure 6. At the same time, the projection 68 on the rear bracket engages with the hook 76 so as to bend the arm 72 upwardly. Engagement of the hook 76 with the projection 68 prevents rearward movement of the panel 20 out of alignment with the roof opening even when the projection 68 is clear of the flange 28.

It is important for the point of attachment 74 of the arm 72 to the flange 28 to be sufficiently close to the position of the pivot pin 36 when the panel is in the position illustrated in Figure 6, for the arcuate path of movement of the projection 68 to be substantially the same as that of the hook formation 76. Instead of forming the arm 72 of spring steel, a rigid arm may be pivotally mounted at 74 and a separate spring provided to bias the rear end of such arm downwardly.

The mechanism supporting the panel on the other side of the roof opening is identical with that described above.

## Claims

1. An opening roof assembly for a motor vehicle, comprising a rigid panel (20) closing an opening in the vehicle roof (14), the panel (20) being supported at each side by front and rear guide means on respective guide tracks(26) extending along each side of an opening in the vehicle roof (14) and behind said opening below the vehicle roof (14), the front guide means (32) being adapted to permit pivotal movement of the panel (20) about a horizontal axis at right-angles to the guide tracks (26) and the rear guide means being adapted to raise and lower the rear edge of the panel (20) so that the panel (20) can be opened either by pivoting the panel (20) upwardly about a transverse horizontal axis adjacent to its front edge, so that the rear edge of the panel (20) is above the vehicle roof (14), or by sliding the panel (20) rearwardly below the vehicle roof (14) behind the opening, characterised in that an arm (72) has one end attached to the vehicle roof (14) at a location (74) adjacent to the front edge of the opening in the vehicle roof (14) and blocking means (76) at its other end adapted to engage over a complementary formation (68) on the panel (20) to prevent rearward movement of the panel (20), stop means (28) on the track (26) being adapted to limit downward movement of the blocking means (76) so as to allow the complementary formation (68) to disengage from the blocking means (76) when the rear edge of the panel (20) is below the vehicle roof (14).

2. An opening roof assembly according to claim 1, wherein the arm (72) is resiliently biased towards the stop means (28).

3. An opening roof assembly according to claim 1 or 2, wherein the blocking means comprises a hook formation (76) and the complementary formation comprises a lateral projection (68) on a flange (38) secured to the panel (20).

4. An opening roof assembly for a motor vehicle, comprising a rigid panel (20) closing an opening in the vehicle roof (14), the panel (20) being supported at each side by front and rear guide means on respective guide tracks (26) extending along each side of an opening in the vehicle roof (14) and behind said opening below the vehicle roof (14), the front guide means (32) being adapted to permit pivotal movement of the panel (20) about a horizontal axis at right-angles to the guide tracks (26) and the rear guide means being adapted to raise and lower the rear edge of the panel (20) so that the panel (20) can be opened either by pivoting the panel (20) upwardly about a transverse horizontal axis adjacent to its front edge, so that the rear edge of the panel (20) is above the vehicle roof (14), or by sliding the panel (20) rearwardly below the vehicle roof (14) behind the opening, wherein the rear guide means comprises a downwardly projecting flange (38) secured to the panel (20), a traveller (56) mounted on the track (26) and a lever (54) pivotally mounted on the traveller (56), the flange (38) having first and second slots (40, 42) therein extending longitudinally relative to the guide tracks (26), the first slot (40) being closed at both ends and the second slot (42) being open to the bottom edge of the flange (38) at its forward end, the lever (54) carrying a first follower (58) permanently engaging in the first slot (40) and a second follower (60) arranged to engage in the second slot (42) when the panel (20) is level with or below the vehicle roof (14), characterised in that the second follower (60) is mounted on the lever (54) at an intermediate position between the guide shoe and the first follower (58), a first cam formation (62) is provided on the lever (54) and a second cam formation (64) is provided on the flange (38) and arranged to engage with the first cam formation (62) to prevent movement of the rear edge of the panel (20) to positions above the level of the vehicle roof (14) when the first follower (58) is rearward of a predetermined position adjacent to the front end of the first slot (40) and to prevent rearward movement of the first follower (58) from said predetermined position when the rear edge of the panel (20) is above the level of the vehicle roof (14).

5. An opening roof assembly according to claim 4, wherein said predetermined position is rearward of the front end of the first slot (40) and the second follower (60) is arranged to engage with a third cam formation (52) on the flange (38) to raise the rear edge of the panel (20) as the first follower (58) moves from said predetermined position to the front end of the first slot (40).

FIG.1.

FIG. 2.

FIG. 5.

FIG. 6.

0 244 110

FIG. 3.

FIG. 4.